# EUROPÄISCHE PATENTSCHRIFT

(11) **EP 2 057 717 B1**
(45) Veröffentlichungstag und Bekanntmachung des Hinweises auf die Patenterteilung: **08.07.2015**
(21) Anmeldenummer: 07819218.4
(22) Anmeldetag: 23.10.2007
(51) Int. Cl.: H01R 13/658, H04Q 1/14, H01R 4/24, H01R 9/03

(54) **VERTEILEREINRICHTUNG EINER TELEKOMMUNIKATIONSANLAGE, AUFNAHMEERINRICHTUNG EINER SOLCHEN VERTEILEREINRICHTUNG SOWIE RANGIERSTECKER**
DISTRIBUTION DEVICE OF A TELECOMMUNICATIONS INSTALLATION, ACCOMMODATING DEVICE FOR SUCH A DISTRIBUTION DEVICE AND JUMPER CONNECTOR
DISPOSITIF DE RÉPARTITION D'UNE INSTALLATION DE TÉLÉCOMMUNICATION, DISPOSITIF DE RÉCEPTION D'UN TEL DISPOSITIF DE RÉPARTITION AINSI QUE FICHE DE CONNEXION

(30) Priorität: 30.10.2006 DE 202006016753 U
(43) Veröffentlichungstag der Anmeldung: 13.05.2009
(73) Patentinhaber: CCS Technology, Inc., Wilmington, DE 19803 (US)
(72) Erfinder: BADURA, Stefan, 58708 Menden (DE); HOFFMANN, Dr.-Ing. Wolfgang, 58097 Hagen (DE); SCHULTE, Wolfgang, 58339 Breckerfeld (DE); LAPP, Oliver, 42399 Wuppertal (DE)
(74) Vertreter: Sturm, Christoph
(86) Internationale Anmeldenummer: PCT/EP2007/009155
(87) Internationale Veröffentlichungsnummer: WO 2008/052678

(56) Entgegenhaltungen:
- EP-A- 0 524 115
- DE-C1- 4 303 976
- DE-U1- 29 703 912
- US-A- 5 634 817

## Beschreibung

Die Erfindung betrifft eine Verteilereinrichtung einer Telekommunikationsanlage nach dem Oberbegriff des Anspruchs 1. Weiterhin betrifft die Erfindung einen Rangierstecker.

Aus der DE 20 2005 014 080 ist eine Verteilereinrichtung einer Telekommunikationsanlage bekannt, die eine als Aufnahmewanne ausgebildete Aufnahmeeinrichtung aufweist, wobei die Aufnahmeeinrichtung mehrere Funktionselemente aufnimmt. Jedes der in der Aufnahmeeinrichtung aufgenommenen Funktionselemente verfügt über als IDC-Kontakte ausgebildete Anschlusselemente, wobei die IDC-Kontakte jedes Funktionselements in Form von zwei übereinander angeordneten IDC-Kontaktreihen angeordnet sind. Die IDC-Kontakte einer ersten IDC-Kontaktreihe eines jedes Funktionselements dienen dem Anschluss von Kabeladem von Teilnehmerkabeln oder Systemkabeln. Die IDC-Kontakte einer zweiten IDC-Kontaktreihe eines jedes Funktionselements dienen hingegen dem Anschluss von Kabeladem von Rangierkabeln. Zur Kontaktierung der IDC-Kontakte der zweiten IDC-Kontaktreihen der Funktionselemente mit den Rangierkabeln dienen Rangierstecker, wobei jedem Rangierkabel ein Rangierstecker zugeordnet ist. Nach der DE 20 2005 014 080 werden über einen Rangierstecker sowohl die a- und b-Kabeladem als auch die s-Kabelader eines Rangierkabels mit den IDC-Kontakten einer zweiten IDC-Kontaktreihe eines Funktionselements kontaktiert.

Aus der EP 0 524 115 A1, der DE 297 03 912 U1 sowie der DE 43 03 976 C1 sind jeweils Funktionselemente von Verteilereinrichtungen bekannt, wobei in die Funktionselemente Schirmungselemente integriert sind.

Aus der US 5,634,817 A ist ein Patchstecker für ein Patchkabel bekannt, wobei der Nachrichtenübertragung dienende Kabeladern des Patchkabels mit Kontaktelementen kontaktiert sind, und wobei eine allen Kabeladern gemeinsame Kabelschirmung mit einem Schirmungselement des Patchsteckers kontaktierbar ist.

Hiervon ausgehend liegt der vorliegende Erfindung das Problem zu Grunde, ein neuartige Verteilereinrichtung einer Telekommunikationsanlage mit einer höheren Packungsdichte sowie eine Aufnahmeeinrichtung und einen Rangierstecker einer solchen Verteilereinrichtung zu schaffen.

Dieses Problem wird durch eine Verteilereinrichtung gemäß Anspruch 1 gelöst.

Bei der erfindungsgemäßen Verteilereinrichtung sind mit den Rangierkabelschirmungselementen s-Kabeladem der Rangierkabel kontaktierbar. Die IDC-Kontakte der zweiten Kontaktreihe eines jeden Funktionselements dienen ausschließlich der Kontaktierung von a-Kabeladem und b-Kabeladem der Rangierkabel. Daher werden bei der erfindungsgemäßen Verteilereinrichtung für die Kontaktierung eines Rangierkabels weniger IDC-Kontakte benötigt als bei aus dem Stand der Technik bekannten Verteilereinrichtungen, so dass an einem Funktionselement eine größere Anzahl von Rangierkabeln kontaktiert werden kann, um so letztendlich die erzielbare Packungsdichte zu erhöhen.

Der Rangierstecker ist im unabhängigen Anspruch 7 definiert.

Bevorzugte Weiterbildungen der Erfindung ergeben sich aus den Unteransprüchen und der nachfolgenden Beschreibung. Ein Ausführungsbeispiel der Erfindung wird, ohne hierauf beschränkt zu sein, anhand der Zeichnung näher erläutert. In der Zeichnung zeigt:
- Fig. 1:: eine erfindungsgemäße Verteilereinrichtung in einer perspektivischen Ansicht von vorne;
- Fig. 2:: die Verteilereinrichtung gemäß Fig. 1 in Seitenansicht;
- Fig. 3:: eine Aufnahmeinrichtung der Verteilereinrichtung gemäß Fig. 1 in einer perspektivischen Ansicht von vorne;
- Fig. 4:: die Aufnahmeinrichtung gemäß Fig. 3 in Seitenansicht;
- Fig. 5:: einen Rangierstecker der Verteilereinrichtung gemäß Fig. 1 in einer ersten perspektivischen Explosionsansicht; und
- Fig. 6:: den Rangierstecker gemäß Fig. 5 in einer zweiten perspektivischen Explosionsansicht.

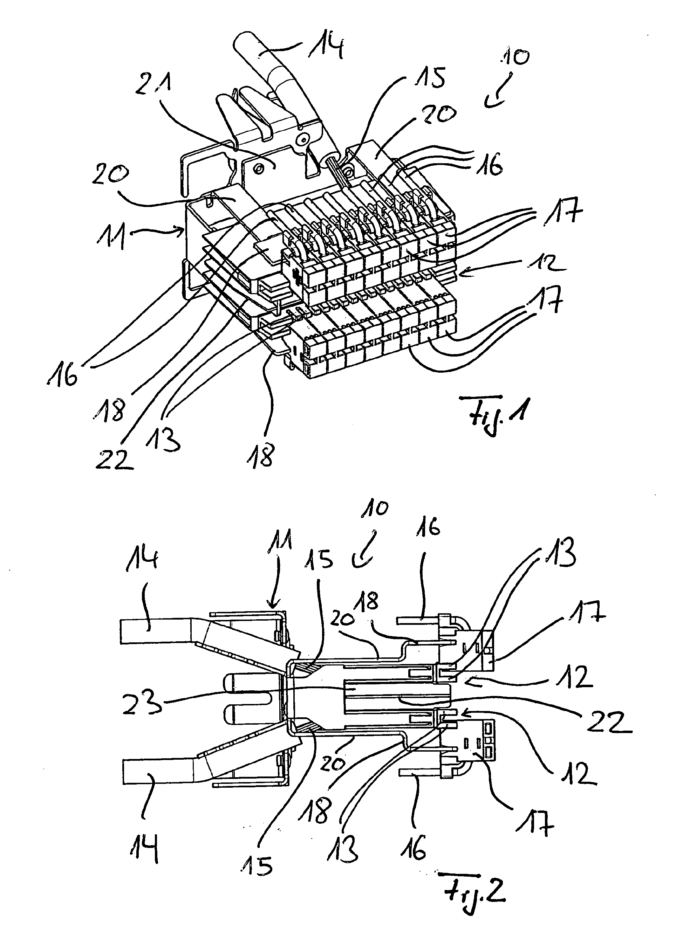

Fig. 1 und 2 zeigen eine erfindungsgemäße Verteilereinrichtung 10 einer Telekommunikationsanlage in unterschiedlichen Ansichten, wobei die Verteilereinrichtung 10 der Fig. 1 und 2 eine als Aufnahmewanne ausgebildete Aufnahmeeinrichtung 11 aufweist, in der mehrere, nämlich im gezeigten Ausführungsbeispiel zwei, Funktionselemente 12 aufgenommen sind. Jedes Funktionselement 12 verfügt über als IDC-Kontakte ausgebildete Anschlusselemente 13, wobei die IDC-Kontakte jedes Funktionselements 12 in zwei übereinander angeordneten, parallel zueinander verlaufenden IDC-Kontaktreihen angeordnet sind.

Jedes Funktionselement 12 verfügt über eine erste IDC-Kontaktreihe zum Anschluss von Kabeladern mindestens eines Teilnehmerkabels oder Systemkabels. So dient im Ausführungsbeispiel der Fig. 1 und 2 die untere IDC-Kontaktreihe des oberen Funktionselements 12 sowie die obere IDC-Kontaktreihe des unteren Funktionselements 12 dem Anschluss von Systemkabeln bzw. Teilnehmerkabeln.

Gemäß Fig. 1 und 2 wird jeder der ersten IDC-Kontaktreihen der beiden Funktionselemente 12 jeweils ein Systemkabel 14 zugeführt. Jedes der Systemkabel 14 verfügt über mehrere Kabeladern 15, die mit den IDC-Kontakten 13 der ersten IDC-Kontaktreihe jedes Funktionselements 12 kontaktiert werden. Wie bereits ausgeführt, handelt es sich bei der ersten IDC-Kontaktreihe des oberen Funktionselements 12 um die untere IDC-Kontaktreihe desselben und bei der ersten IDC-Kontaktreihe des unteren Funktionselements 12 um die obere IDC-Kontaktreihe desselben.

Neben der ersten IDC-Kontaktreihe verfügt jedes Funktionselement 12 weiterhin über eine zweite IDC-Kontaktreihe aus IDC-Kontakten 13, die dem Anschluss von Kabeladern von Rangierkabeln 16 dienen. Die Kabeladern eines jedes Rangierkabels 16 werden dabei unter Verwendung jeweils eines Rangiersteckers 17 mit IDC-Kontakten 13 der zweiten IDC-Kontaktreihe des jeweiligen Funktionselements 12 kontaktiert, wobei es sich gemäß Fig. 1 und 2 bei der zweiten IDC-Kontaktreihe des oberen Funktionselements 12 um die obere IDC-Kontaktreihe desselben und bei der zweiten IDC-Kontaktreihe des unteren Funktionselements 12 um die untere IDC-Kontaktreihe desselben handelt.

Jedes Rangierkabel 16 verfügt vorzugsweise über drei Kabeladern, nämlich eine sogenannte a-Kabelader, eine sogenannte b-Kabelader sowie eine sogenannte s-Kabelader, wobei es sich bei den a- und b-Kabeladern um Nachrichtendaten führende Kabeladern und bei der s-Kabelader um einen Schirmungsdraht handelt. Bei der erfindungsgemäßen Verteilereinrichtung 10 sind die a-Kabelader sowie die b-Kabelader jedes Rangierkabels 16 mit IDC-Kontakten 13 einer zweiten IDC-Kontaktreihe eines Funktionselements 12 kontaktierbar, die s-Kabelader eines jeden Rangierkabels 16 wird hingegen nicht mit IDC-Kontakten der zweiten IDC-Kontaktreihe des jeweiligen Funktionselements 12 kontaktiert, sondern vielmehr mit einem benachbart sowie parallel zu der jeweiligen zweiten IDC-Kontaktreihe des jeweiligen Funktionselements 12 verlaufenden Rangierkabelschirmungselement 18.

So kann insbesondere Fig. 2 entnommen werden, dass benachbart zu der zweiten IDC-Kontaktreihe eines jedes Funktionselements 12 ein Rangierkabelschirmungselement 18 verläuft, wobei das Rangierkabelschirmungselement 18 Bestandteil der Aufnahmeeinrichtung 11 ist. Dann, wenn ein Rangierstecker 17 mit IDC-Kontakten 13 einer zweiten IDC-Kontaktreihe eines Funktionselements 12 kontaktiert wird, wird derselbe auch mit dem parallel zu dieser zweiten IDC-Kontaktreihe des jeweiligen Funktionselements 12 verlaufenden Rangierkabelschirmungselement 18 kontaktiert. Bedingt dadurch, dass die s-Kabeladern eines jeden Rangierkabels 16 nicht mit IDC-Kontakten 13 eines Funktionselements sondern vielmehr mit dem Rangierkabelschirmungselement 18 kontaktiert werden, werden zur Kontaktierung eines Rangierkabels 16 an einem Funktionselement 12 weniger IDC-Kontakte benötigt, als dann, wenn wie beim Stand der Technik üblich, auch die s-Kabeladern eines jeden Rangierkabels an den IDC-Kontakten kontaktiert würden. Daher können gemäß der Erfindung an einem Funktionselement 12 eine höhere Anzahl von Rangierkabeln 16 kontaktiert werden, so dass hierdurch die Packungsdichte gesteigert werden kann.

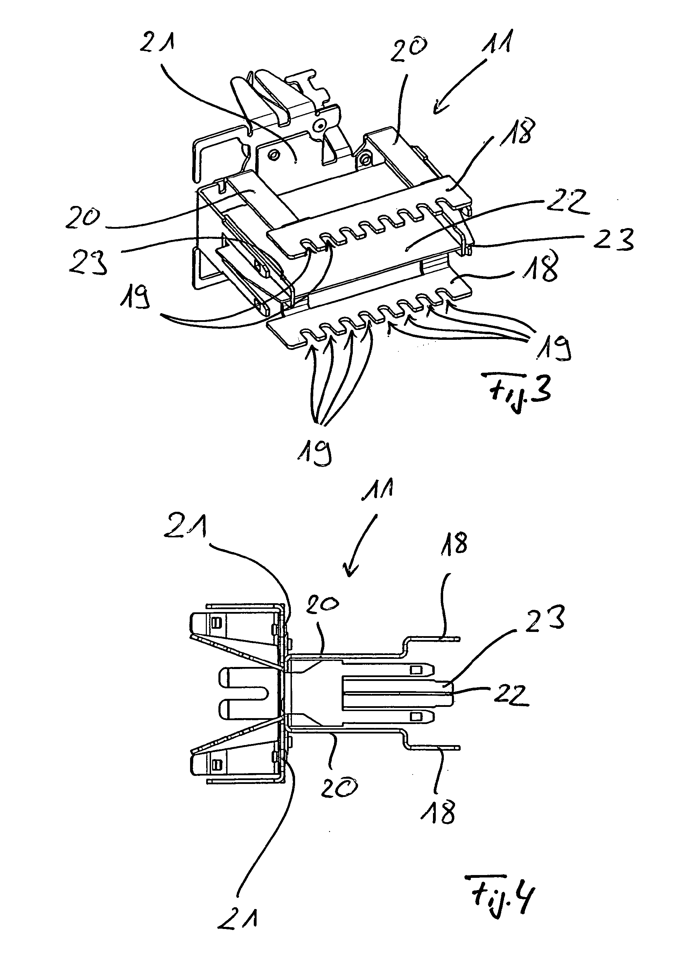

Wie am besten Fig. 3 entnommen werden kann, ist jedes Rangierkabelschirmungselement 18 als Schirmungsblech ausgebildet, welches mehrere Kontaktierabschnitte 19 zur Kontaktierung jeweils eines Rangiersteckers 17 aufweist. Jedes Rangierkabelschirmungselement 18 erstreckt sich über die gesamte Breite einer zweiten IDC-Kontaktreihe eines Funktionselements 12 und ist über seitliche Stege 20 mit einer Rückwand 21 der Aufnahmeeinrichtung 11 elektrisch leitend verbunden.

Neben den Rangierkabelschirmungselementen 18, die der Schirmung der Rangierkabel 16 dienen, verfügt die Aufnahmeeinrichtung 11 weiterhin über ein Schirmungselement 22, um benachbarte Funktionselemente 12 gegeneinander zu schirmen. Das sich zwischen den beiden Funktionselementen 12 der Fig. 1 und 2 erstreckende Schirmungselement 22 ist dabei wiederum als Schirmungsblech ausgebildet, welches mit der Rückwand 21 der Aufnahmeeinrichtung 11 elektrisch leitend kontaktiert ist.

Dem Schirmungselement 22 sind gemäß Fig. 3 und 4 an seitlichen Abschnitten Begrenzungselemente 23 zugeordnet. Die Begrenzungselemente 23 definieren den Abstand der Funktionselemente 12 vom Schirmungselement 22 und damit den Abstand benachbarter Funktionselemente 12 voneinander. Die Begrenzungselemente 23 sind im Unterschied zum Schirmungselement 22 sowie den Rangierkabelschirmungselementen 18 elektrisch nicht leitend. So sind die Begrenzungselemente 23 vorzugsweise aus Kunststoff und das Schirmungselement 22 sowie die Rangierkabelschirmungselemente 18 vorzugsweise aus Metall gefertigt. Die Begrenzungselemente 23 verhindern, dass die Systemkabel 14 bei der Montage seitlich aus der Verteilereinrichtung 10 herausrutschen.

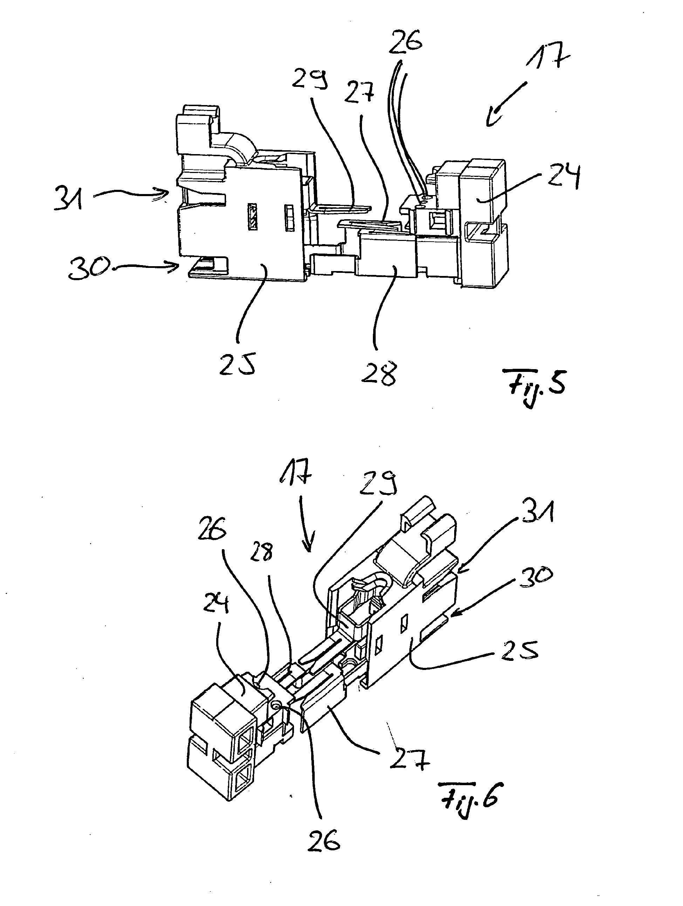

Wie bereits ausgeführt, wird jedes Rangierkabel 16 unter Verwendung eines Rangiersteckers 17 sowohl mit IDC-Kontakten 13 einer zweiten IDC-Kontaktreihe eines Funktionselements 12 als auch mit dem benachbart zu dieser zweiten IDC-Kontaktreihe des Funktionselements verlaufenden Rangierkabelschirmungselement 18 kontaktiert. Fig. 5 und 6 zeigen einen derartigen Rangierstecker 17 in zwei perspektivischen Explosionsdarstellungen, wobei der Rangierstecker 17 prinzipiell wie der aus der DE 20 2005 014 080 bekannte Rangierstecker aufgebaut ist.

So verfügt der Rangierstecker 17 gemäß Fig. 5 und 6 über ein Oberteil 24 und ein Unterteil 25, die relativ zueinander verstellbar sind. Das Oberteil 24 verfügt über Aufnahmeöffnungen 26 für die Kabeladern eines Rangierkabels 16, das Unterteil 25 verfügt über Aufnahmepositionen für Kontaktelemente 27, 28 und 29 des Rangiersteckers 17. Jedes der Kontaktelemente 27, 28 und 29 verfügt über ein erstes Ende, mit Hilfe dessen das jeweilige Kontaktelement mit einer Kabelader eines Rangierkabels 16 kontaktierbar ist. So dient das Kontaktelement 27 der Kontaktierung der a-Kabelader eines Rangierkabels 16, das Kontaktelement 28 die der Kontaktierung der b-Kabelader und das Kontaktelement 29 dient der Kontaktierung der s-Kabelader des Rangierkabels 16.

Die Kontaktierung der Kabeladern eines Rangierkabels 16 mit den ersten Enden der Kontaktelemente 27, 28 und 29 eines Rangiersteckers 17 erfolgt dadurch, dass die Kabeladern zuerst in die Aufnahmeöffnung 26 des Oberteils 24 eingefädelt und dass anschließend das Oberteil 24 und Unterteil 25 des Rangiersteckers 17 relativ zueinander verstellt, nämlich zusammengeschoben, werden, um den Rangierstecker 17 in eine Schaltposition zu überführen, in der die Kabeladern des Rangierkabels mit den ersten Enden der Kontaktelemente des Rangiersteckers elektrisch leitend kontaktiert sind.

Die Kontaktelemente 27, 28 und 29 des Rangiersteckers 17 verfügen über zweite Enden, über die der Rangierstecker 17 und damit die Kabeladern des Rangierkabels 16 einerseits mit IDC-Kontakten 13 eines Funktionselements und andererseits mit einem Rangierkabelschirmungselement 18 der Aufnahmeeinrichtung 11 der Verteilereinrichtung 10 kontaktierbar sind.

Die zweiten Enden der Kontaktelemente 27 und 28, mit denen die a-Kabelader und die b-Kabelader eines Rangierkabels 16 kontaktiert sind, sind dabei mit IDC-Kontakten 13 einer zweiten IDC-Kontaktreihe eines Funktionselements 12 kontaktierbar, wobei diese zweiten Enden der Kontaktelemente 27 und 28 des Rangiersteckers 17 in einer ersten Ebene 30 positioniert sind.

Das zweite Ende des Kontaktelements 29, mit welchem die s-Kabelader eines Rangierkabels 16 kontaktiert ist, ist hingegen beim erfindungsgemäßen Rangierstecker in einer zweiten Ebene 31 und damit versetzt zu der ersten Ebene 30 angeordnet, um so zu gewährleisten, dass das zweite Ende des Kontaktelements 29 mit dem parallel zu einer zweiten IDC-Kontaktreihe eines Funktionselements 12 verlaufenden Rangierkabelschirmungselement 18 kontaktierbar ist.

### Bezugszeichenliste

- 10: Verteilereinrichtung
- 11: Aufnahmeeinrichtung
- 12: Funktionselement
- 13: Anschlusselement
- 14: Systemkabel
- 15: Kabelader
- 16: Rangierkabel
- 17: Rangiersteckers
- 18: Rangierkabelschirmungselement
- 19: Kontaktierungsabschnitt
- 20: Steg
- 21: Rückwand
- 22: Schirmungselement
- 23: Begrenzungselement
- 24: Oberteil
- 25: Unterteil
- 26: Aufnahmeöffnung
- 27: Kontaktelement
- 28: Kontaktelement
- 29: Kontaktelement
- 30: erste Ebene
- 31: zweite Ebene

## Patentansprüche

1. Verteilereinrichtung einer Telekommunikationsanlage, mit einer Aufnahmeeinrichtung, die mehrere Funktionselemente aufnimmt, wobei jedes Funktionselement als IDC-Kontakte ausgebildete, in zwei übereinander angeordneten IDC-Kontaktreihen positionierte Anschlusselemente aufweist, wobei die IDC-Kontakte einer ersten IDC-Kontaktreihe jedes Funktionselements dem Anschluss von Kabeladern mindestens eines Teilnehmerkabels oder Systemkabels dienen, wobei die IDC-Kontakte einer zweiten IDC-Kontaktreihe jedes Funktionselements dem Anschluss von Kabeladern mindestens eines Rangierkabels dienen, wobei jedes Rangierkabel eine Nachrichtendaten führende a-Kabelader und b-Kabelader und eine der Schirmung dienende s-Kabelader aufweist, und wobei die a-Kabelader und die b-Kabelader jedes Rangierkabels über einen Rangierstecker an IDC-Kontakte der zweiten IDC-Kontaktreihe eines Funktionselements anschließbar ist, **dadurch gekennzeichnet, dass** die Aufnahmeeinrichtung (11) benachbart, nämlich oberhalb oder unterhalb, zu der zweiten IDC-Kontaktreihe eines jeden Funktionselements (12) ein Rangierkabelschirmungselement (18) aufweist, welches sich parallel zur jeweiligen zweiten IDC-Kontaktreihe über die gesamte Breite desselben erstreckt, wobei mit dem Rangierkabelschirmungselement (18) ein jeder Rangierstecker (17) bei Kontaktierung desselben mit IDC-Kontakten (13) einer zweiten IDC-Kontaktreihe eines Funktionselements (12) derart kontaktierbar ist, dass die s-Kabelader des jeweiligen Rangierkabels über den jeweiligen Rangierstecker nicht an die IDC-Kontakte der jeweiligen zweiten IDC-Kontaktreihe sondern an das parallel zu derselben verlaufende Rangierkabelschirmungselement (18) anschließbar ist.

2. Verteilereinrichtung nach Anspruch 1, **dadurch gekennzeichnet, dass** jedes Rangierkabelschirmungselement (18) als Schirmungsblech ausgebildet ist, welches sich in etwa über die gesamte Breite der zweiten IDC-Kontaktreihe des jeweiligen Funktionselements (12) erstreckt.

3. Verteilereinrichtung nach Anspruch 2, **dadurch gekennzeichnet, dass** jedes Rangierkabelschirmungselement (18) über seitliche Stege (20) mit einer Rückwand (21) der Aufnahmeeinrichtung (11) elektrisch leitend verbunden ist.

4. Verteilereinrichtung nach einem der Ansprüche 1 bis 3, **dadurch gekennzeichnet, dass** die Aufnahmeeinrichtung (11) mindestens ein sich zwischen zwei benachbarten Funktionselementen (12) erstreckendes Schirmungselement (22) aufweist, um benachbarte Funktionselemente (12) gegeneinander zu schirmen.

5. Verteilereinrichtung nach Anspruch 4, **dadurch gekennzeichnet, dass** das Schirmungselement (22) als Schirmungsblech ausgebildet ist, welches mit einer Rückwand (21) der Aufnahmeeinrichtung (11) elektrisch leitend kontaktiert ist.

6. Verteilereinrichtung nach Anspruch 4 oder 5, **dadurch gekennzeichnet, dass** dem Schirmungselement (22) an seitlichen Abschnitten Begrenzungselemente (23) zugeordnet sind, die den Abstand benachbarter Funktionselemente (12) vom Schirmungselement (22) definieren, wobei das Schirmungselement (22) sowie jedes Rangierkabelschirmungselement (18) elektrisch leitend und die Begrenzungselemente (23) elektrisch nicht leitend sind.

7. Rangierstecker für Rangierkabel einer Verteilereinrichtung, mit einem Aufnahmeöffnungen für die Kabeladern eines Rangierkabels aufweisenden Oberteil und mit einem Aufnahmepositionen für Kontaktelemente des Rangiersteckers aufweisenden Unterteil, wobei das Oberteil und das Unterteil relativ zueinander verstellbar sind, um den Rangierstecker in unterschiedliche Schaltpositionen zu überführen, wobei die in die Aufnahmeöffnungen des Oberteils eingeführten Kabeladern eines Rangierkabels durch Überführen des Rangiersteckers von einer ersten Schaltposition in eine zweite Schaltposition mit einem ersten Ende jeweils eines Kontaktelements des Rangiersteckers kontaktierbar sind, **dadurch gekennzeichnet, dass** der Rangierstecker mit gegenüberliegenden zweiten Enden der Kontaktelemente (27, 28, 29) einerseits mit IDC-Kontakten eines Funktionselements und anderseits mit einem Rangierkabelschirmungselement einer Aufnahmeeinrichtung der Verteilereinrichtung kontaktierbar ist, wobei hierzu die zweiten Enden der mit einer a-Kabelader und einer b-Kabelader eines Rangierkabels zusammenwirkenden Kontaktelemente (27, 28) des Rangiersteckers in einer ersten Ebene (30) und das zweite Ende des mit einer s-Kabelader des Rangierkabels zusammenwirkenden Kontaktelements (29) in einer zweiten Ebene (31), die zur ersten Ebene (30) versetzt ist, angeordnet sind.

## Claims

1. Distribution device of a telecommunications installation, having an accommodation device which accommodates a plurality of functional elements, wherein each functional element has connection elements which are in the form of IDC contacts and are positioned in two IDC contact rows which are arranged one above the other, wherein the IDC contacts of a first IDC contact row of each functional element serve to connect cable cores of at least one subscriber cable or system cable, wherein the IDC contacts of a second IDC contact row of each functional element serve to connect cable cores of at least one jumper cable, wherein each jumper cable has an a-cable core and a b-cable core which carry message data and has an s-cable core which serves for shielding purposes, and wherein the a-cable cores and the b-cable cores of each jumper cable can be connected to IDC contacts of the second IDC contact row of a functional element by means of a jumper plug, **characterized in that** the accommodation device (11) has, adjacent to, specifically above or below, the second IDC contact row of each functional element (12), a jumper cable shielding element (18) which extends parallel to the respective second IDC contact row over the entire width of the said jumper cable shielding element, wherein the jumper cable shielding element (18) can make contact with each respective jumper plug (17), when the said jumper plug makes contact with IDC contacts (13) of a second IDC contact row of a functional element (12), in such a way that the s-cable core of the respective jumper cable cannot be connected to the IDC contacts of the respective second IDC contact row, but rather to the jumper cable shielding element (18) which runs parallel to the said second IDC contact row, by means of the respective jumper plug.

2. Distribution device according to Claim 1, **characterized in that** each jumper cable shielding element (18) is in the form of a shielding plate which extends approximately over the entire width of the second IDC contact row of the respective functional element (12).

3. Distribution device according to Claim 2, **characterized in that** each jumper cable shielding element (18) is electrically conductively connected to a rear wall (21) of the accommodation device (11) by means of lateral webs (20).

4. Distribution device according to one of Claims 1 to 3, **characterized in that** the accommodation device (11) has at least one shielding element (22) which extends between two adjacent functional elements (12) in order to shield adjacent functional elements (12) from one another.

5. Distribution device according to Claim 4, **characterized in that** the shielding element (22) is in the form of a shielding plate, a rear wall (21) of the accommodation device (11) making electrically conductive contact with the said shielding plate.

6. Distribution device according to Claim 4 or 5, **characterized in that** boundary elements (23), which define the distance of adjacent functional elements (12) from the shielding element (22), are associated with the shielding element (22) at lateral sections, wherein the shielding element (22) and also each jumper cable shielding element (18) are electrically conductive, and the boundary elements (23) are electrically non-conductive.

7. Jumper plug for jumper cables of a distribution device, having an upper part, which has receiving openings for the cable cores of a jumper cable, and having a lower part, which has accommodation positions for contact elements of the jumper plug, wherein the upper part and the lower part can be adjusted relative to one another in order to move the jumper plug to different switching positions, wherein a first end of in each case one contact element of the jumper plug can make contact with the cable cores of a jumper cable, which cable cores are inserted into the receiving openings in the upper part, by the jumper plug moving from a first switching position to a second switching position, **characterized in that** firstly IDC contacts of a functional element and secondly a jumper cable shielding element of an accommodation device of the distribution device can make contact with the jumper plug by way of opposite second ends of the contact elements (27, 28, 29), wherein, to this end, the second ends of the contact elements (27, 28) of the jumper plug, which contact elements interact with an a-cable core and a b-cable core of a jumper cable, are arranged in a first plane (30), and the second end of the contact element (29), which interacts with an s-cable core of the jumper cable, is arranged in a second plane (31) which is offset in relation to the first plane (30).

## Revendications

1. Dispositif de répartition d'une installation de télécommunication, avec un dispositif de réception recevant plusieurs éléments fonctionnels, chaque élément fonctionnel comportant des éléments de raccordement prenant la forme de contacts IDC et positionnés dans deux rangées de contacts IDC disposées l'une au-dessus de l'autre, les contacts IDC d'une première rangée de contacts IDC de chaque élément fonctionnel servant au raccordement de torons de câble d'au moins un câble de participant ou d'un câble de système, les contacts IDC d'une deuxième rangée de contacts IDC de chaque élément fonctionnel servant au raccordement de torons de câble d'au moins un câble de raccordement, chaque câble de raccordement comportant un toron de câble a conduisant des données de message et un toron de câble b et un toron de câble s servant de blindage et le toron de câble a et le toron de câble b de chaque câble de raccordement pouvant être raccordés, via une fiche de raccordement, aux contacts IDC de la deuxième rangée de contacts IDC d'un élément fonctionnel, **caractérisé en ce que** le dispositif de réception (11) comporte à proximité, notamment au-dessus ou en dessous, de la deuxième rangée de contacts IDC de chaque élément fonctionnel (12) un élément de blindage de câble de raccordement (18) s'étendant parallèlement à la deuxième rangée de contacts IDC respective sur la totalité de la largeur de celle-ci, chaque fiche de raccordement (17) pouvant être mise en contact avec l'élément de blindage de câble de raccordement (18) en cas de mise en contact de celui-ci avec les contacts IDC (13) d'une deuxième rangée de contacts IDC d'un élément fonctionnel (12) de telle sorte que le toron de câble s du câble de raccordement respectif ne peut pas être raccordé, via la fiche de raccordement respective, aux contacts IDC de la deuxième rangée de contacts IDC respective mais à l'élément de blindage de câble de raccordement (18) s'étendant parallèlement à celui-ci.

2. Dispositif de répartition selon la revendication 1, **caractérisé en ce que** chaque élément de blindage de câble de raccordement (18) prend la forme d'une tôle de blindage s'étendant approximativement sur la totalité de la largeur de la deuxième rangée de contacts IDC de l'élément fonctionnel (12) respectif.

3. Dispositif de répartition selon la revendication 2, **caractérisé en ce que** chaque élément de blindage de câble de raccordement (18) est relié de façon électriquement conductrice à une paroi arrière (21) du dispositif de réception (11) via les étais latéraux (20).

4. Dispositif de répartition selon l'une quelconque des revendications 1 à 3, **caractérisé en ce que** le dispositif de réception (11) comporte au moins un élément de blindage (22) s'étendant entre deux éléments fonctionnels (12) connexes, pour blinder des éléments fonctionnels (12) connexes l'un par rapport à l'autre.

5. Dispositif de répartition selon la revendication 4, **caractérisé en ce que** l'élément de blindage (22) prend la forme d'une tôle de blindage au contact électriquement conducteur d'une paroi arrière (21) du dispositif de réception (11).

6. Dispositif de répartition selon la revendication 4 ou 5, **caractérisé en ce que** des éléments de délimitation (23) sont associés à l'élément de blindage (22) au niveau des sections latérales, lesdits éléments de délimitation définissant la distance des éléments fonctionnels (12) connexes avec l'élément de blindage (22), l'élément de blindage (22) ainsi que chaque élément de blindage de câble de raccordement (18) étant électriquement conducteur et les éléments de délimitation (23) étant électriquement non conducteurs.

7. Fiche de raccordement pour câble de raccordement d'un dispositif de répartition, avec une partie supérieure comportant des ouvertures de réception pour les torons de câble d'un câble de raccordement et avec une partie inférieure comportant des positions de réception pour les éléments de contact de la fiche de raccordement, la partie supérieure et la partie inférieure pouvant être déplacées l'une par rapport à l'autre, pour guider la fiche de raccordement dans différentes positions de connexion, les torons de câble d'un câble de raccordement introduits dans les ouvertures de réception de la partie supérieure pouvant être mis en contact avec une première extrémité respectivement d'un élément de contact de la fiche de raccordement par guidage de la fiche de raccordement d'une première position de connexion dans une deuxième position de connexion, **caractérisée en ce que** la fiche de raccordement peut être mise au contact des deuxièmes extrémités opposées des éléments de contact (27, 28, 29) d'une part, avec des contacts IDC d'un élément fonctionnel, et d'autre part avec un élément de blindage de câble de raccordement d'un dispositif de réception du dispositif de répartition, les deuxièmes extrémités des éléments de contact (27, 28) de la fiche de raccordement interagissant avec un toron de câble a et un toron de câble b d'un câble de raccordement étant disposées pour ce faire dans un premier plan (30) et la deuxième extrémité de l'élément de contact (29) interagissant avec un toron de câble s du câble de raccordement étant disposée dans un deuxième plan (31) décalé par rapport au premier plan (30).
